# EUROPEAN PATENT SPECIFICATION

(11) **EP 2 207 823 B1**
(45) Date of publication and mention of the grant of the patent: **08.08.2018**
(21) Application number: 08847343.4
(22) Date of filing: 31.10.2008
(51) Int. Cl.: C08F 222/02, C08F 2/10, C08F 220/04, C08F 220/38, C11D 3/37

(54) **COPOLYMER COMPOSITION AND METHOD OF PRODUCING THE COMPOSITION**
COPOLYMERZUSAMMENSETZUNG UND VERFAHREN ZU IHRER HERSTELLUNG
COMPOSITION DE COPOLYMÈRE ET PROCÉDÉ DE FABRICATION DE LA COMPOSITION

(30) Priority: 09.11.2007 JP 2007292303; 18.02.2008 JP 2008035533
(43) Date of publication of application: 21.07.2010
(73) Proprietor: Nippon Shokubai Co., Ltd., Chuo-ku Osaka-shi Osaka 541-0043 (JP)
(72) Inventor: TSUMORI, Takahiro, Nishinomiya-shi Hyogo 662-0012 (JP); NAKANO, Masato, Kakogawa-shi Hyogo 675-0055 (JP)
(74) Representative: Glawe, Delfs, Moll
(86) International application number: PCT/JP2008/070366
(87) International publication number: WO 2009/060965

(56) References cited:
- WO-A1-95/03342
- WO-A1-2009/123322
- JP-A- 58 067 706
- JP-A- 2000 355 615
- JP-A- 2000 355 615
- JP-A- 2006 347 784
- JP-T- 2003 500 207
- JP-T- 2008 510 603
- JP-T- 2008 510 864
- US-A- 4 659 793
- US-B1- 6 207 780
- US-B1- 6 521 721

## Description

### TECHNICAL FIELD

The present invention relates to a copolymer composition and a method of producing the composition.

### BACKGROUND ART

It has been known that a copolymer includes a structural unit originating from acrylic acid (or an acrylate), a structural unit originating from maleic acid (or a maleate), and a structural unit originating from a sulfonic acid (or sulfonate) group-containing monomer free of an ester bond and an amide bond (preferably 3-allyloxy-2-hydroxypropanesulfonic acid (or a 3-allyloxy-2-hydroxypropanesulfonate) (which may hereinafter be referred to as HAPS)), a copolymer includes a structural unit originating from acrylic acid (or an acrylate), a structural unit originating from maleic acid (or a maleate), and a structural unit originating from sulfoethyl methacrylate (which may hereinafter be referred to as "SEMS")), or a copolymer includes a structural unit originating from acrylic acid (or an acrylate), a structural unit originating from maleic acid (or a maleate), and a structural unit originating from 2-acrylamide-2-methylpropanesulfonic acid (or a 2-acrylamide-2-methylpropanesulfonate) (which may hereinafter be referred to as "AMPS") serves as an additive for a detergent having excellent performance (see JP 2000-355615 A and JP 03-234713 A, for example).

It has been known that an improvement in clay dispersibility or an anti-iron deposition ability is an important factor for an improvement in detergency as one kind of performance of an additive for a detergent (see JP 2004-189785 A, for example).

However, a copolymer using SEMS or AMPS cannot exert sufficient performance when used as an additive for a detergent because of the following problem: an ester bond or an amide bond hydrolyzes.

Therefore, a copolymer includes a structural unit originating from acrylic acid (or an acrylate), a structural unit originating from maleic acid (or a maleate), and a structural unit originating from a sulfonic acid (or sulfonate) group-containing monomer free of an ester bond and an amide bond (which may hereinafter be referred to as "HAPS or the like") is preferably used as an additive for a detergent in order that the clay dispersibility or the anti-iron deposition ability may be improved.

However, the copolymer includes a structural unit originating from acrylic acid (or an acrylate), a structural unit originating from maleic acid (or a maleate), and a structural unit originating from HAPS or the like described in JP 2000-355615 Ahas a low molecular weight (the weight average molecular weight of the copolymer is 9, 000 or less inExamples), so its clay dispersibility, inparticular, clay dispersibility under water having high hardness has not arrived at a sufficiently satisfactory level.

A copolymer which is includes a structural unit originating from acrylic acid (or an acrylate), a structural unit originating from maleic acid (or a maleate), and a structural unit originating from HAPS or the like, and has a weight average molecular weight of 36,000 has also been disclosed (see JP 02-129020 A, for example) . However, the copolymer contains the structural unit originating from maleic acid (or a maleate) at a small ratio (10 mol% in Example 8), so its anti-iron deposition ability has not arrived at a sufficiently satisfactory level.

A copolymer includes a structural unit originating fromacrylic acid (or an acrylate), a structural unit originating from HAPS or the like, and a structural unit showing hydrophobicity has also been disclosed (see JP 2007-231263 A, for example) . However, the copolymer has no structural unit originating from maleic acid (or a maleate), so its anti-iron deposition ability has not arrived at a sufficiently satisfactory level.

When one attempts to obtain a copolymer which is includes a structural unit originating from acrylic acid (or an acrylate), a structural unit originating from maleic acid (or a maleate), and a structural unit originating from HAPS or the like, and has a high weight average molecular weight, and contains the structural unit originating from maleic acid (or a maleate) at a high ratio in view of the foregoing, the following problem arises: according to the method described in JP 2000-355615 A, the amount of remaining maleic acid (or a remaining maleate) increases, with the result that the copolymer is poor in anti-iron deposition ability.

A method of producing a copolymer includes a structural unit originating from acrylic acid (or an acrylate) reducing the amount of remaining maleic acid (or a remaining maleate), a structural unit originating from maleic acid (or a maleate), and a structural unit originating from AMPS has also been disclosed (see JP 62-218407 A, for example) . However, HAPS or the like is inferior in reactivity to AMPS having high reactivity, so the following problem arises: even the application of the production method disclosed in JP 62-218407 A to a method of producing a copolymer includes a structural unit originating from acrylic acid (or an acrylate), a structural unit originating from maleic acid (or a maleate), and a structural unit originating from HAPS or the like cannot reduce the amount of remaining maleic acid (or a remaining maleate), with the result that the resultant copolymer is poor in anti-iron deposition ability.

### DISCLOSURE OF THE INVENTION

### PROBLEMS TO BE SOLVED BY THE INVENTION

An object of the present invention is to provide a copolymer composition which can achieve a high level of compatibility between clay dispersibility under water having high hardness and an anti-iron deposition ability and is suitable for an additive for a detergent, and a method of producing the composition.

### MEANS FOR SOLVING THE PROBLEMS

A copolymer composition of the present invention includes a copolymer (P) which has a weight average molecular weight of 10,000 to 50,000 and contains a structural unit originating from a monoethylenic unsaturated dicarboxylic acid (or dicarboxylate) monomer (a) at 30 to 60 mol%, a structural unit originating from a monoethylenic unsaturated monocarboxylic acid (or monocarboxylate) monomer (b), and a structural unit originating from a sulfonic acid (or sulfonate) group-containing monomer (c) free of an ester bond and an amide bond, and a structural unit originating from another monomer (d), wherein a content ratio (a)/(b)/(c)/(d) is (30 to 60 mol%)/(30 to 60 mol%)/(5 to 16 mol %)/(0 to 5 mol%) in a molar ratio and 100 mol% in the total, and a remaining monoethylenic unsaturated dicarboxylic acid (or dicarboxylate) monomer a content of which in terms of an acid is less than 12,000 ppm.

In a preferred embodiment, the sulfonic acid (or sulfonate) group-containing monomer (c) free of an ester bond and an amide bond includes a 3-allyloxy-2-hydroxypropanesulfonic acid (or 3-allyloxy-2-hydroxypropanesulfonate) monomer.

According to another aspect of the present invention, a method of producing the copolymer composition is provided. The production method of the present invention is the method of producing the copolymer composition of the present invention using a monoethylenic unsaturated dicarboxylic acid (or dicarboxylate) monomer (a), a monoethylenic unsaturated monocarboxylic acid (or monocarboxylate) monomer (b), and a sulfonic acid (or sulfonate) group-containing monomer (c) free of an ester bond and an amide bond and another monomer d) as monomers for polymerization, including
(1) in an aqueous solvent containing 80 wt% or more of water,
(2) loading initially 80 wt% or more of the monoethylenic unsaturated dicarboxylic acid (or dicarboxylate) monomer (a) with respect to a total usage of the monomer (a), and dropping a remainder of the monomer (a);
(3) dropping 90 wt% or more of the monoethylenic unsaturated monocarboxylic acid (or monocarboxylate) monomer (b) with respect to a total usage of the monomer (b), and loading initially a remainder of the monomer (b);
(4) dropping 80 wt% or more of each of hydrogen peroxide and a persulfate as polymerization initiators with respect to a usage of each of hydrogen peroxide and the persulfate, and loading initially a remainder of each of hydrogen peroxide and the persulfate, and initiating the dropping of each of hydrogen peroxide and the persulfate within a time period corresponding to one third of a total time period for which a monomer for polymerization dropping of which is initiated earliest is dropped from a time point of the initiation of the dropping of the monomer for polymerization;
(5) adjusting, after termination of the initial loading, a neutralization degree to 50 to 95 mol% with respect to a total acid amount originating from the initially loaded monomers for polymerization, initiating polymerization of the monomers after the adjustment, and adjusting a solid content concentration of reactants during a polymerization reaction to 40 to 70 wt%; and
(6) adjusting, after termination of dropping of a total amount of the monomers for polymerization, a pH of the reactants to 4 to 10, adjusting the solid content concentration to 40 to 60 wt%, and setting a polymerization temperature to 80°C or higher.

In a preferred embodiment, 25 wt% or more of a total usage of the persulfate is dropped after the termination of the dropping of the total amount of the monomers for polymerization.

### EFFECT OF THE INVENTION

According to the present invention, there can be provided a copolymer composition which can achieve a high level of compatibility between clay dispersibility under water having high hardness and an anti-iron deposition ability, and is suitable for an additive for a detergent, and a method of producing the composition.

### BEST MODE FOR CARRYING OUT THE INVENTION

### «copolymer composition»

The copolymer composition of the present invention includes a copolymer (P) which has a weight average molecular weight of 10,000 to 50,000 and contains a structural unit originating from a monoethylenic unsaturated dicarboxylic acid (or dicarboxylate) monomer (a) at 30 to 60 mol%, a structural unit originating from a monoethylenic unsaturated monocarboxylic acid (or monocarboxylate) monomer (b), and a structural unit originating from a sulfonic acid (or sulfonate) group-containing monomer (c) free of an ester bond and an amide bond, and a remaining monoethylenic unsaturated dicarboxylic acid (or dicarboxylate) monomer a content of which in terms of an acid is less than 12,000 ppm.

The term "-ate" as used in this specification refers to, for example, a salt of an alkali metal such as sodium or potassium, a salt of an alkaline earth metal such as calcium or magnesium, an ammonium salt, or an organic amine salt such as monoethanolamine or triethanolamine. Only one kind of them may be used, or two or more kinds of them may be used in combination. A salt of an alkali metal such as sodium or potassium is preferable, and a sodium salt is particularly preferable. In addition, the term "structural unit originating from a monomer" as used in this specification means a structural unit portion originating from a monomer in a polymer obtained by the polymerization of the monomer.

Any appropriate monoethylenic unsaturated dicarboxylic acid (or dicarboxylate) can be adopted as the monoethylenic unsaturated dicarboxylic acid (or dicarboxylate) monomer (a). Examples of the adoptable acid or salt include maleic acid, itaconic acid, mesaconic acid, fumaric acid, and citraconic acid and salts of these acids, and an anhydride of any such acid if the acid can have an anhydrous form. Only one kind of them may be used, or two or more kinds of them may be used in combination. In addition, a derivative of, for example, any one of those exemplified compounds can be used to such an extent that an effect of the present invention is not impaired. Maleic acid (or a maleate), or maleic anhydride is particularly preferable.

Any appropriate monoethylenic unsaturated monocarboxylic acid (or monocarboxylate) can be adopted as the monoethylenic unsaturated monocarboxylic acid (or monocarboxylate) monomer (b). Examples of the adoptable acid or salt include acrylic acid, methacrylic acid, crotonic acid, isocrotonic acid, and α-hydroxymethylacrylic acid, and salts of these acids. Only one kind of them may be used, or two or more kinds of them may be used in combination. In addition, a derivative of, for example, any one of those exemplified compounds can be used to such an extent that the effect of the present invention is not impaired. Acrylic acid and methacrylic acid, and salts of the acids are particularly preferable.

As a sulfonic acid (sulfonate) group-containing monomer (c) free of ester bond and amide bond (HAPS or the like), there is a sulfonic acid (sulfonate) group-containing monomer having an unsaturated bond (carbon-carbon double bond), free of ester bond and amide bond. For example, 3-allyloxy-2-hydroxypropane sulfonic acid (or 3-allyloxy-2-hydroxypropanesulfonate), 3-methaloxy-2-hydroxypropane sulfonic acid (or 3-methaloxy-2-hydroxypropanesulfonate), (meth)allylsulfonicacid (or (meth) allylsulfonate), vinyl sulfonic acid (or vinylsulfonate), (meth)allyloxybenzene sulfonic acid (or (meth)allyloxybenzenesulfonate), and styrene sulfonic acid (or styrenesulfonate) are mentioned. Of those, 3-allyloxy-2-hydroxypropane sulfonic acid (or 3-allyloxy-2-hydroxypropanesulfonate) and 3-methaloxy-2-hydroxypropane sulfonic acid (or 3-methaloxy-2-hydroxypropanesulfonate) are preferred, and 3-allyloxy-2-hydroxypropane sulfonic acid (or 3-allyloxy-2-hydroxypropanesulfonate) is more preferred with the viewpoint of the excellent anti-iron deposition ability due to having the hydroxyl group.

As 3-allyloxyl-2-hydroxypropane sulfonic acid (or 3-allyloxyl-2-hydroxypropanesulfonate), 3-allyloxy-2-hydroxypropane sulfonic acid and its salts are mentioned. Only one kind of them may be used, or two or more kinds of them may be used in combination.

The copolymer composition of the present invention may have a structural unit originating from the other monomer (d) in addition to the structural unit originating from the monoethylenic unsaturated monocarboxylic acid (or monocarboxylate) monomer, the structural unit originating from the monoethylenic unsaturated dicarboxylic acid (or dicarboxylate) monomer, and the structural unit originating from the sulfonic acid (or sulfonate) group-containing monomer free of an ester bond and an amide bond to such an extent that the effect of the present invention is not impaired. Any appropriate monomer can be adoptedas the othermonomer (d) as long as the monomer is a monoethylenic unsaturated monomer capable of copolymerizing with the monoethylenic unsaturated monocarboxylic acid (or monocarboxylate) monomer, the monoethylenic unsaturated dicarboxylic acid (or dicarboxylate) monomer, and the sulfonic acid (or sulfonate) group-containing monomer free of an ester bond and an amide bond (HAPS or the like). Examples of the other monomer (d) include: styrene; vinyl acetate; N-vinylpyrrolidone; N-vinylpyridine; (meth)acrylonitrile; (meth)acrylamide; alkyl (meth)acrylates such as methyl(meth)acrylate, ethyl(meth)acrylate, butyl(meth)acrylate, lauryl(meth)acrylate, and stearyl(meth)acrylate; hydroxymethyl (meth)acrylate; hydroxyethyl (meth)acrylate; hydroxypropyl (meth)acrylate; 2-ethylhexyl (meth)acrylate; dimethylaminoethyl (meth)acrylate; diethylaminoethyl (meth)acrylate; (meth)allylalcohol and its alkyleneoxide adduct; (iso)prenol and its alkyleneoxide adduct; 3-(meth)acryloxy-1,2-dihydroxypropane; 3-(meth)acryloxy-1,2-di(poly)alkyleneoxide ether propane; 3-(meth)allyloxy-2-hydroxypropane phosphoric acid (or 3-(meth)allyloxy-2-hydroxypropanephosphate); 2-acrylamidemethyl-2-propane sulfonic acid (or 2-acrylamidemethyl-2-propanesulfonate); sulfoethylmethacrylate; sulfopropyl methacrylate, and sulfomethyl (meth)acrylamide.

In the polymer composition of the present invention, a content ratio ((b)/(a)/(c)/(d)) of a structural unit originating from monoethylenic unsaturated monocarboxylic acid (or monocarboxylate) monomer (b), a structural unit originating from monoethylenic unsaturated dicarboxylic acid (or dicarboxylate) monomer (a), a structural unit originating from sulfonic acid (sulfonate) group-containing monomer (c) free of ester bond and amide bond, and a structural unit originating from the other monomer (d) is, in a molar ratio, 30 to 60/30 to 60/5 to 16/0 to 5 and 100 mol% in the total, preferably 35 to 55/35 to 55/5 to 16/0 to 5 and 100 mol% in the total, and more preferably 40 to 50/40 to 50/5 to 16/0 to 5 and 100 mol% in the total.

It is particularly important that the content of the structural unit originating from the monoethylenic unsaturated dicarboxylic acid (or dicarboxylate) monomer (a) in the copolymer in the copolymer composition of the present invention should be 30 to 60 mol%, preferably 35 to 55 mol%, or more preferably 40 to 50 mol%. Setting the content of the structural unit originating from the monoethylenic unsaturated dicarboxylic acid (or dicarboxylate) monomer (a) in the copolymer within the above range enables the composition to obtain a sufficient anti-iron deposition ability, exert a sufficient anti-gelling ability, and express a high clay-dispersing ability under water having high hardness.

Setting the content of the structural unit originating from the monoethylenic unsaturated monocarboxylic acid (or monocarboxylate) monomer (b) in the copolymer in the copolymer composition of the present invention within the above range enables the composition to obtain an additionally sufficient anti-iron deposition ability and express an additionally high clay-dispersing ability under water having high hardness.

Setting the content of the structural unit originating from the sulfonic acid (or sulfonate) group-containing monomer (c) free of an ester bond and an amide bond in the copolymer in the copolymer composition of the present invention within the above range enables the composition to obtain an additionally sufficient anti-iron deposition ability and exert an additionally sufficient anti-gelling ability.

Setting the content of the structural unit originating from the other monomer (d) in the copolymer in the copolymer composition of the present invention within the above range enables the composition to obtain an additionally sufficient anti-iron deposition ability and express an additionally high clay-dispersing ability under water having high hardness.

The weight average molecular weight of the copolymer in the copolymer composition of the present invention is 10,000 to 50,000, preferably 11,000 to 30,000, or more preferably 12,000 to 20,000. Setting the weight average molecular weight of the copolymer within the above range enables the composition to express a high clay-dispersing ability under water having high hardness.

The copolymer in the copolymer composition of the present invention preferably has water solubility. When the copolymer is water-soluble, the composition can obtain an additionally sufficient anti-iron deposition ability.

The content of the remaining monoethylenic unsaturated dicarboxylic acid (or dicarboxylate) monomer in the copolymer composition of the present invention in terms of an acid is less than 12,000 ppm, preferably less than 9,500 ppm, or more preferably less than 7,000 ppm in terms of a solid content. Setting the content of the remaining monoethylenic unsaturated dicarboxylic acid (or dicarboxylate) monomer in terms of an acid within the above range enables the composition to obtain a sufficient anti-iron deposition ability.

The copolymer composition of the present invention has a clay-dispersing ability of preferably 1.00 or more, or more preferably 1.10 or more. A method of measuring the clay-dispersing ability will be described later.

The copolymer composition of the present invention has an anti-iron deposition ability of preferably 92.5 or more, or more preferably 93.0 or more. A method of measuring the anti-iron deposition ability will be described later.

### <<Method of producing copolymer composition>>

The method of producing the copolymer composition of the present invention is method of producing the copolymer composition using a monoethylenic unsaturated dicarboxylic acid (or dicarboxylate) monomer (a), a monoethylenic unsaturated monocarboxylic acid (or monocarboxylate) monomer (b), and a sulfonic acid (or sulfonate) group-containing monomer (c) free of an ester bond and an amide bond as monomers for polymerization, including
(1) in an aqueous solvent containing 80 wt% or more of water,
(2) loading initially 80 wt% or more of the monoethylenic unsaturated dicarboxylic acid (or dicarboxylate) monomer (a) with respect to a total usage of the monomer (a), and dropping a remainder of the monomer (a);
(3) dropping 90 wt% or more of the monoethylenic unsaturated monocarboxylic acid (or monocarboxylate) monomer (b) with respect to a total usage of the monomer (b), and loading initially a remainder of the monomer (b);
(4) dropping 80 wt% or more of each of hydrogen peroxide and a persulfate as polymerization initiators with respect to a usage of each of hydrogen peroxide and the persulfate, and loading initially a remainder of each of hydrogen peroxide and the persulfate, and initiating the dropping of each of hydrogen peroxide and the persulfate within a time period corresponding to one third of a total time period for which a monomer for polymerization dropping of which is initiated earliest is dropped from a time point of the initiation of the dropping of the monomer for polymerization;
(5) adjusting, after termination of the initial loading, a neutralization degree to 50 to 95 mol% with respect to a total acid amount originating from the initially loaded monomers for polymerization, initiating polymerization of the monomers after the adjustment, and adjusting a solid content concentration of reactants during a polymerization reaction to 40 to 70 wt%; and
(6) adjusting, after termination of dropping of a total amount of the monomers for polymerization, a pH of the reactants to 4 to 10, adjusting the solid content concentration to 40 to 60 wt%, and setting a polymerization temperature to 80°C or higher.

### <Solvent>

The solvent that can be used in the production method of the present invention is an aqueous solvent containing 80 wt% or more of water, or is preferably water. In order that the solubility of each of the monomers to be used in the polymerization in the solvent may be improved, an organic solvent may be appropriately added to the solvent as required to such an extent that the polymerization is not adversely affected.

As the organic solvent, any appropriate organic solvent may be employed. For example, lower alcohols such as methanol, ethanol, and isopropylalcohol, lower ketones such as acetone, methylethyl ketone, and diethyl ketone, ethers such as dimethyl ether, diethyl ether, and dioxane, and amides such as dimethylformaldehyde are mentioned. Only one kind of them may be used, or two or more kinds of them may be used in combination.

### <Methods of adding monomers>

Methods of adding the monomers in the production method of the present invention will be described sequentially.

### (Monoethylenic unsaturated dicarboxylic acid (or dicarboxylate) monomer (a))

80 wt% or more of the monomer (a) with respect to the total usage of the monomer (a) is initially loaded, and the remainder of the monomer (a) is dropped; the total amount of the monomer (a) is preferably initially loaded. When the initially loaded amount falls within the above range, an unreacted product in the latter half of the polymerization can be reduced, the monomer (a) can be uniformly introduced into the copolymer, and the composition can obtain a sufficient anti-iron deposition ability and exert a sufficient anti-gelling ability.

### (Monoethylenic unsaturated monocarboxylic acid (or monocarboxylate) monomer (b))

90 wt% or more of the monomer (b) with respect to the total usage of the monomer (b) is added to a reaction system by being dropped in a substantially continuous manner, and the remainder of the monomer (b) is initially loaded; the total amount of the monomer (b) is preferably added. When the ratio at which the monomer (b) is dropped falls within the above range, the block polymerization of the monomer (b) in the early stage of the polymerization can be suppressed, an increase in molecular weight of the copolymer can also be prevented, and the composition can obtain a sufficient anti-iron deposition ability, exert a sufficient anti-gelling ability, and express a high clay-dispersing ability under water having high hardness. The monomer (b) is dropped for a time period of preferably 30 to 240 minutes, more preferably 60 to 180 minutes, or still more preferably 90 to 150 minutes. Setting the time period for which the monomer (b) is dropped within the above range can additionally suppress the block polymerization of the monomer (b), and enables the composition to obtain an additionally sufficient anti-iron deposition ability, exert an additionally sufficient anti-gelling ability, and express an additionally high clay-dispersing ability under water having high hardness.

### (Sulfonic acid (or sulfonate) group-containing monomer (c) free of ester bond and amide bond, and other monomer (d))

Methods of adding the monomer (c) and the monomer (d) are not particularly limited. A ratio between the initially loaded amount of each of the monomers and the amount in which the monomer is dropped, and, when the monomer is dropped, the time period for which the monomer is dropped have only to be appropriately set in view of the reactivity of the monomer.

### (Neutralization degree of initially loaded monomer)

The neutralization degree of an initially loaded monomer is 50 to 95 mol% with respect to the total acid amount originating from the initially loaded monomers (a) to (d) after the termination of the initial loading, that is, in the stage prior to the loading of the polymerization initiators. Setting the neutralization degree within the above range can suppress the block polymerization of the monomer (a), improves the efficiency with which the monomer (a) is introduced, and enables the composition to obtain a sufficient anti-iron deposition ability and exert a sufficient anti-gelling ability. Any appropriate neutralizer can be adopted as a neutralizer for each of the monomers. Examples of the neutralizer include: a hydroxide of an alkali metal such as sodium hydroxide or potassium hydroxide; a hydroxide of an alkaline earth metal such as calcium hydroxide or magnesium hydroxide; ammonia; and an organic amine salt such as monoethanolamine or triethanolamine. Only one kind of them may be used, or two or more kinds of them may be used in combination. A hydroxide of an alkali metal such as sodium hydroxide or potassium hydroxide is preferable, and sodium hydroxide is particularly preferable.

A neutralization degree during the polymerization (that is, during the dropping of a monomer) can be set to any appropriate neutralization degree within a pH condition range to be described later. The neutralization degree may be appropriately set with a neutralizer in consideration of, for example, the reactivity of the monomer.

### <Polymerization initiators>

Radical polymerization initiators, specifically, hydrogen peroxide and a persulfate are used as the polymerization initiators in the production method of the present invention. A chain transfer agent and a polyvalent metal ion as a promoter for the decomposition of each of the initiators may be used in combination with the initiators in some cases. Specific description of the initiators will be given below.

Any appropriate persulfate can be adopted as the persulfate. Examples of the persulfate include ammonium persulfate, potassium persulfate, and sodium persulfate. Only one kind of them may be used, or two or more kinds of them may be used in combination.

The total usage of the radical polymerization initiators is preferably 2 g to 10 g, or more preferably 2.5 g to 8 g with respect to 1 mol of each monomer. Setting the usage of the radical polymerization initiators within the above range can reduce the residue of each monomer, is economically advantageous, can improve the purity content of the resultant copolymer, and enables the composition to obtain an additionally sufficient anti-iron deposition ability, exert an additionally sufficient anti-gelling ability, and express an additionally high clay-dispersing ability under water having high hardness.

A method of adding each of the radical polymerization initiators is preferably as follows: the amount in which each of hydrogen peroxide and the persulfate is dropped in a substantially continuous manner is 80 wt% or more of the usage of each of the radical polymerization initiators, and the remainder of each of hydrogen peroxide and the persulfate is initially loaded; the total amount of each of hydrogen peroxide and the persulfate is more preferably dropped. Setting the amount in which each of hydrogen peroxide and the persulfate is dropped in a substantially continuous manner within the above range enables the composition to obtain a sufficient anti-iron deposition ability, exert a sufficient anti-gelling ability, and express a high clay-dispersing ability under water having high hardness.

With regard to the time period for which each of the radical polymerization initiators is dropped, it is important that the dropping of each of hydrogen peroxide and the persulfate should be initiated within a time period corresponding to one third, preferably one fourth, or more preferably one fifth, of the total time period for which the monomer for polymerization the dropping of which is initiated earliest is dropped from the time point of the initiation of the dropping of the monomer for polymerization. Dropping each of hydrogen peroxide and the persulfate within the above time period can suppress the remaining of the monoethylenic unsaturated dicarboxylic acid (or dicarboxylate) monomer (a).

With regard to the time period for which each of the radical polymerization initiators is dropped, the dropping of hydrogen peroxide is terminated earlier than the time point of the termination of the dropping of the monomers for polymerization by preferably 10 minutes or longer, or more preferably 20 minutes or longer. When hydrogen peroxide is dropped within the above time period, each of the added radical polymerization initiators can be prevented from remaining excessively by the time of the termination of the polymerization, and each of the radical polymerization initiators can sufficiently exert its effect, the residue of each of the radical polymerization initiators can be reduced, and the heat stability of the resultant copolymer can be improved.

25 wt% or more of the total usage of the persulfate is preferably dropped after the termination of the dropping of the total amount of the monomers for polymerization. The amount in which the persulfate is dropped after the termination of the dropping of the total amount of the monomers for polymerization is preferably 25 to 65 wt%, more preferably 27.5 to 62 wt%, or still more preferably 30 to 60 wt% with respect to the total usage of the persulfate. Setting the amount in which the persulfate is dropped after the termination of the dropping of the total amount of the monomers for polymerization within the above range can reduce the residue of the monoethylenic unsaturated dicarboxylic acid (or dicarboxylate) monomer (a), is economically advantageous, can improve the purity content of the resultant copolymer, and enables the composition to obtain an additionally sufficient anti-iron deposition ability, exert an additionally sufficient anti-gelling ability, and express an additionally high clay-dispersing ability under water having high hardness.

### <Chain transfer agent>

A chain transfer agent maybe used as a molecular weight modifier for the copolymer as required in combination with the radical polymerization initiators to such an extent that the polymerization is not adversely affected. Any appropriate chain transfer agent can be adopted as the chain transfer agent. Examples of the chain transfer agent include a sulfite, a bisulfite, and a hypophosphite. Only one kind of them may be used, or two or more kinds of them may be used in combination.

A weight ratio of the usage of the chain transfer agent to the amount of the radical polymerization initiators is preferably 2 or less. Even when the chain transfer agent is used in such a manner that the ratio exceeds 2, no effect of the excess addition of the agent appears, and a reduction in purity content of the copolymer may occur. In addition, any appropriate method or any appropriate time period can be adopted as a method of adding the chain transfer agent or the time period for which the agent is dropped.

### <Polyvalent metal ion>

A polyvalent metal ion may be used as a promoter for the decomposition of each of the radical polymerization initiators as required in combination with the initiators. An effective polyvalent metal ion that can be used is, for example, Fe²⁺, Fe³⁺, Cu²⁺, Cu⁺, V²⁺, V³⁺, or VO²⁺. Only one kind of them may be used, or two or more kinds of them may be used in combination.

Any appropriate method can be adopted as a method of adding the above polyvalent metal ion. For example, the ion is preferably added before the termination of the dropping of the monomers for polymerization, and the total amount of the ion is more preferably initially loaded.

Any appropriate amount can be adopted as the usage of the above polyvalent metal ion. For example, the amount is preferably 100 ppm or less, more preferably 50 ppm or less, or still more preferably 10 ppm or less with respect to the total amount of a reaction liquid. Setting the usage of the above polyvalent metal ion within the above range can provide an economically excellent effect and an excellent effect for increasing an effect of the addition of the ion.

As the form of polyvalent metal ion upon its supplying, any appropriate form may be employed. The ionized one in the polymerization reaction system is preferred. As the metal compound and metal, for example, mentioned are: water-soluble metal salts such as vanadium oxytrichloride, vanadium trichloride, vanadium oxalate, vanadium sulfate, vanadic acid anhydride, ammonium methavanadate, ammonium hypovanadus sulfate [(NH₄)₂SO₄·VSO₄·6H₂O], ammonium vanadus sulfate [(NH₄)V(SO₄)₂·12H₂O], copper (II) acetate, copper (II) bromide, copper (II) acetyl acetate, cupric chloride, ammonium copper chloride, copper carbonate, copper (II) chloride, cupric (II) citrate, copper (II) formate, copper (II) hydrate, copper nitrate, copper napthenate, copper (II) oleate, copper maleate, copper phosphate, copper (II) sulfate, cuprous chloride, copper (I) cyanide, copper iodide, copper (I) oxide, copper thiocyanate, iron acetylacetate, ammonium iron citrate, ferric ammonium oxalate, ferrous ammonium sulfate, ferric ammonium sulfate, iron citrate, iron fumarate, iron maleate, ferrous lactate, ferric nitrate, iron pentacarbonyl, ferric phosphate, ferric pyrophosphate; metal oxides such as vanadium pentoxide, copper (II) oxide, ferrous oxide, and ferric oxide; metallic sulfide such as copper (II) sulfate and iron sulfate; copper powder; and iron powder.

### <Other additive>

In the production method of the present invention, the composition may contain, for example, any other additive except the above respective additives to such an extent that the effect of the present invention is not impaired.

### <Other polymerization conditions>

Other polymerization conditions in the production method of the present invention are, for example, a pH, a temperature, a concentration, and a pressure. Those conditions will be specifically described sequentially.

### (pH)

The pH of the reactants at the time of the termination of the initial loading (that is, immediately before the initiation of the dropping of a monomer for polymerization to be added by dropping, or, when the dropping of a radical polymerization initiator is initiated before the dropping of the monomer for polymerization, immediately before the initiation of the dropping of the radical polymerization initiator) is preferably 8 to 12. After that, the polymerization is initiated, and the following setting is preferably performed: the pH gradually reduces as the polymerization progresses. The pH of the reactants is preferably adjusted to 4 to 10 after the termination of the dropping of the total amount of the monomers for polymerization.

In general, the polymerizability of the monomer (a) is extremely worse as compared to that of the monomer (b). Accordingly, the monomer (a) is added in a large amount in the stage of initial loading. In that case, however, the concentration of the monomer (a) is overwhelmingly larger as compared to that of the monomer (b) in the early stage of the polymerization, so the block polymerization of the monomer (a) mayoccur. In view of the foregoing, in the production method of the present invention, the inventors of the present invention have considered that the pH must be adjusted with a view to controlling the polymerizability of the monomer (a), so the inventors have set the pH within the above range. The monomer (a) is a monomer having a dicarboxylic acid, and the possible types of the monomer are classified into the following three types: a type in which both carboxyl groups are acidic, a type in which one of the groups is acidic, and a type in which both the groups are neutral. Of those, the type in which one of the groups is acidic, that is, a semi-neutral type is most rich in polymerizability, so the polymerizability of the monomer (a) can be controlled by controlling the abundance of the molecules of the monomer (a) of the semi-neutral type. That is, in the early stage of the polymerization, the abundance of the molecules of the semi-neutral type is suppressed to some extent. Then, the amount of the molecules of the semi-neutral type must be increased because the polymerizability of the monomer (a) also reduces as the polymerization progresses so that the concentration of the monomer (a) itself reduces. The inventors have arrived at the above setting of the pH in consideration of those findings.

It should be noted that the "neutralizer" described in the section titled "Methods of adding monomers" has only to be appropriately used as a pH adjustor as required. It should be noted that the final pH has only to be set to a desired pH by appropriately using the "neutralizer" after the termination of the polymerization as required.

### (Polymerization temperature)

A temperature at the time of the polymerization is preferably 80°C or higher, more preferably near the boiling point of a polymerization solvent, or still more preferably the boiling point of the polymerization solvent during a time period from the initiation of the polymerization caused by the initiation of the dropping of each monomer for polymerization or each radical polymerization initiator to the termination of the polymerization (that is, when an additional time period for which the resultant copolymer is aged is set after the termination of the dropping of all components including the monomers for polymerization, the radical polymerization initiators, and the chain transfer agent, the termination of the aging).

Setting the polymerization temperature within the above range can improve the efficiency with which each of the radical polymerization initiators is decomposed and reduce the residue of each of the monomers for polymerization in the resultant copolymer. In addition, the polymerization is preferably performed at a temperature near the boiling point of the polymerization solvent (or more preferably at the boiling point of the polymerization solvent) because the temperature can be extremely easily controlled, the polymerization can be performed with good reproducibility, and the quality of the resultant copolymer is extremely stable.

### (Polymerization concentration)

Any appropriate concentration can be adopted as the concentration of each of the monomers for polymerization at the time of the polymerization to such an extent that the effect of the present invention is not impaired. For example, the concentration of each monomer at the time of the initial loading is preferably 35 to 75 wt%, more preferably 40 to 70 wt%, or still more preferably 45 to 60 wt%. Setting the concentration at the time of the initial loading within the above range can: improve the reactivity of the monomer (a); improve the productivity of the composition; maintain the water solubility of each monomer for polymerization; and suppress a state where a reaction liquid is turned into slurry or the production of a precipitate in the reaction liquid so that the monomers can be homogeneously polymerized.

### (Solid content concentration of reactants during polymerization reaction)

The solid content concentration of the reactants during a polymerization reaction is adjusted between 40 to 70 wt%. Setting the solid content concentration within the above range makes it possible to obtain effectively a copolymer composition capable of exerting the effect of the present invention.

### (Solid content concentration of reactants after termination of dropping of total amount of monomers for polymerization)

The solid content concentration of the reactants after the termination of the dropping of the total amount of the monomers for polymerization is adjusted between 40 to 60 wt%. Setting the solid content concentration within the above range makes it possible to obtain effectively a copolymer composition capable of exerting the effect of the present invention.

### (Polymerization pressure)

Any appropriate pressure can be adopted as a pressure at the time of the polymerization to such an extent that the effect of the present invention is not impaired. For example, the polymerization may be performed under any one of increased pressure, normal pressure (atmospheric pressure), and reduced pressure.

### <<Application of copolymer composition>>

### <Detergent composition>

The copolymer composition of the present invention is particularly suitably used in a detergent composition. That is, a detergent composition of the present invention contains the copolymer composition of the present invention.

The loading of the copolymer composition of the present invention in the detergent composition of the present invention is preferably 1 to 20 wt% with respect to the entirety of the detergent composition. Setting the loading of the copolymer composition within the above range allows an effect of the addition of the copolymer composition to be sufficiently expressed, allows the effect of the addition to contribute to an improvement in detergency of the detergent composition sufficiently, and can be economically advantageous.

The detergent composition of the present invention may be blended with any appropriate component to be ordinarily used in a detergent composition such as a surfactant, an enzyme, an alkaline builder, a chelate builder, a reattachment inhibitor, a soil release agent, a color migration inhibitor, a softening agent, a fluorescent agent, a bleaching agent, a bleaching assistant, a flavor, a foaming agent, a defoaming agent, an antibacterial agent, a corrosion inhibitor, or a colorant as required. In addition, the composition may be blended with zeolite.

As the surfactant, at least one selected from the group consisting of an anionic surfactant, a nonionic surfactant, an amphoteric surfactant, and a cationic surfactant may be used.

As the anionic surfactant, any appropriate anionic surfactant may be employed. For example, an alkylbenzene sulfonate, an alkyl or alkenyl ether sulfonate, an alkyl or alkenyl sulfonate, an α-olefin sulfonate, an α-sulfo fatty acid or fatty acid ester salt, an alkane sulfonate, a saturated or unsaturated fatty acid salt, an alkyl or alkenyl ether carboxylate, an amino acid-type surfactant, an N-acylamino surfactant, and an alkyl or alkenyl phosphate and its salts are mentioned.

As the nonionic surfactant, any appropriate nonionic surfactant may be employed. For example, a polyoxyalkylene alkyl or alkenyl ether, a polyoxyethylene alkylphenyl ether, a higher fatty acid alkanol amide or its alkyleneoxide adduct, sucrose fatty acid ester, alkyl glycoxide, glycerin fatty acid monoester, and alkylamine oxide are mentioned.

Any appropriate amphoteric surfactant can be adopted as the amphoteric surfactant. Examples of the amphoteric surfactant include a carboxy type amphoteric surfactant and a sulfobetaine type amphoteric surfactant.

Any appropriate cationic surfactant can be adopted as the cationic surfactant. Examples of the cationic surfactant include quaternary ammonium salts.

Any appropriate enzyme can be adopted as the enzyme to be blended into the detergent composition of the present invention.

As the enzyme, a protease, a lipase, and a cellulase are mentioned, for example. Specifically, a protease, alkali lipase, and alkali cellulase each having high activity in an alkali cleaning fluid are preferred.

As the alkali builder, any appropriate alkali builder may be employed. For example, a silicate, a carbonate, and a sulfate are mentioned.

As the chelate builder, any appropriate chelate builder may be employed. For example, diglycol acid (or diglycolate), oxycarboxylic acid (or oxycarboxylate), ethylene diamine tetraacetic acid (EDTA), diethylenetriamine hexaacetic acid (DTPA), citric acid (or citrate), 3-hydroxy-2,2'-iminodisuccinic acid (or 3-hydroxy-2,2'-iminodisuccinate), L-asparaginic acetic acid (or L-asparaginicacetate), methylglycine diacetic acid (or methylglycinediacetate), and L-glutamine diacetic acid (or L-glutaminediacetate) are mentioned.

### <Inorganic pigment dispersant>

The copolymer composition of the present invention can be used in an inorganic pigment dispersant. Condensed phosphoric acid and a salt of the acid, phosphonic acid and a salt of the acid, and polyvinyl alcohol may each be used as another compounding agent in the inorganic pigment dispersant as required.

The content of the copolymer composition of the present invention in the above inorganic pigment dispersant is preferably 5 to 100 wt% with respect to the entirety of the inorganic pigment dispersant. In addition, the inorganic pigment dispersant may contain any appropriate water-soluble polymer to such an extent that the polymer affects neither the performance of the inorganic pigment dispersant and the effect of the dispersant.

The above inorganic pigment dispersant can exert good performance when used as a dispersant for an inorganic pigment such as calcium carbonate heavy or precipitated calcium carbonate, or clay for use in paper coating. For example, a small amount of an inorganic pigment dispersant is added to an inorganic pigment, and the mixture is dispersed in water, whereby high-concentration inorganic pigment slurry such as high-concentration calcium carbonate slurry having the following characteristics can be produced: the slurry has a low viscosity and high fluidity, and the stability over days of the performance of each of the dispersant and the pigment is good.

When the above inorganic pigment dispersant is used as a dispersant for an inorganic pigment, the usage of the inorganic pigment dispersant is preferably 0.05 to 2.0 parts by weight with respect to 100 parts by weight of the inorganic pigment. Setting the usage of the inorganic pigment dispersant within the above range makes it possible to obtain a sufficient dispersing effect of the dispersant on the pigment, makes the effect commensurate with the addition amount of the dispersant, and can be economically advantageous.

### <Water treatment agent>

The copolymer composition of the present invention can be used in a water treatment agent. A polymerized phosphate, a phosphonate, an anticorrosive, a slime control agent, and a chelate agent may each be used as another compounding agent in the water treatment agent as required.

The above water treatment agent is useful in preventing scaling in, for example, a cooling water circulating system, a boiler water circulating system, a seawater desalination apparatus, a pulp digester, or a black liquor concentrating cooker. In addition, the water treatment agent may contain any appropriate water-soluble polymer to such an extent that the polymer affects neither the performance of the water treatment agent and the effect of the agent.

### <Fiber treatment agent>

The copolymer composition of the present invention can be used in a fiber treatment agent. The fiber treatment agent contains at least one selected from the group consisting of a stain, a peroxide, and a surfactant, and the copolymer composition of the present invention.

The content of the copolymer composition of the present invention in the above fiber treatment agent is preferably 1 to 100 wt%, or more preferably 5 to 100 wt% with respect to the entirety of the fiber treatment agent. In addition, the fiber treatment agent may contain any appropriate water-soluble polymer to such an extent that the polymer affects neither the performance of the fiber treatment agent and the effect of the agent.

A blending example of the fiber treatment agent additionally close to an embodiment will be described below. The fiber treatment agent can be used in a refining, staining, bleaching, or soaping step in a fiber treatment. Examples of each of the stain, the peroxide, and the surfactant include those ordinarily used in fiber treatment agents.

In order that, for example, the degree of whiteness and colorfastness of a fiber may be improved, and the color unevenness of the fiber may be alleviated, a compounding ratio between the copolymer composition of the present invention and at least one selected from the group consisting of the stain, the peroxide, and the surfactant is preferably as follows: a composition obtained by blending 1 part by weight of the copolymer composition of the present invention with 0.1 to 100 parts by weight of at least one selected from the group consisting of the stain, the peroxide, and the surfactant in terms of the purity content of the fiber treatment agent is used as the fiber treatment agent.

Any appropriate fiber can be adopted as a fiber for which the above fiber treatment agent can be used. Examples of the fiber include: cellulose-based fibers such as cotton and hemp; chemical fibers such as nylon and polyester; animal fibers such as wool and silk; semi-synthetic fibers such as artificial silk; and textile fabrics and blended yarn fabrics of these fibers.

Upon application of the above fiber treatment agent to a refining step, the copolymer composition of the present invention, an alkaline agent, and the surfactant are preferably blended with one another. Upon application of the agent to a bleaching step, the copolymer composition of the present invention, the peroxide, and a silicic acid-based drug such as sodium silicate as a retardant for the decomposition of an alkaline bleaching agent are preferably blended with one another.

### Examples

Hereinafter, the present invention will be described in more detail by way of examples. However, the present invention is not limited to these examples. It should be noted that the terms "part (s) " and "%" in each example refer to "part (s) by weight" and "wt%", respectively unless otherwise stated.

### <Weight average molecular weight>

A weight average molecular weight (Mw) is a value measured by gel permeation chromatography (GPC).

| | |
|---|---|
| Measuring apparatus: | "Shodex SYSTEM-21" manufactured by Showa Denko K.K. |
| Column: | a column obtained by connecting a "Asahipak GF-710 HQ" and a "Asahipak GF-310 HQ" each manufactured by Showa Denko K.K. in the stated order |
| Eluent: | 0.1N sodium acetate/acetonitrile = 7/3 (volume ratio) |
| Flow rate: | 0.5 mL/min |
| Temperature: | 40°C |
| Analytical curve: | created by using a polyacrylic acid standard sample (manufactured by Sowa Kagaku Co., Ltd.) |
| Detector: | RI |

### <Method of measuring solid content>

The solid content of a reaction liquid containing a copolymer after the termination of polymerization was calculated by defining non-volatile matter remaining after the treatment of the reaction liquid with a hot air dryer at 170°C for 1 hour as a solid content.

### <Clay-dispersing ability>

(1) First, 600 g of a glycine buffer were prepared by adding ion-exchanged water to 67.56 g of glycine, 52.6 g of sodium chloride, and 60 ml of a 1-mol/L aqueous solution of NaOH.
(2) 0.817 g of calcium chloride dihydrate was added to 60 g of the liquid prepared in the item (1), and pure water was added to the mixture, whereby 1, 000 g of a dispersion were prepared. In addition, a 0.1% aqueous solution of a polymer in terms of a solid content was prepared.
(3) 0.3 g of clay composed of 11 kinds of JIS test powders I (Kanto loam, particulate, the Association of Powder Process Industry and Engineering, JAPAN) was loaded into a general test tube having a volume of about 30 cc to be used in an experiment, and 27 g of the dispersion prepared in the item (2) and 3 g of the 0.1% aqueous solution of the polymer in terms of a solid content were added to the test tube. In this case, the calcium concentration of a test liquid is 500 ppm in terms of calcium carbonate.
(4) After having been hermetically sealed with a parafilm, the test tube was lightly shaken in such a manner that the clay was dispersed in the entirety of the mixture, and was then further shaken vertically 20 times. After the test tube had been left at rest out of direct sunlight for 6 hours, 5 ml of the supernatant of the dispersion were collected with a whole pipette.
(5) The absorbance (ABS) of a 1-cm cell containing the liquid for light having a wavelength of 380 nm was measured with a UV spectrophotometer (manufactured by Shimadzu Corporation, UV-1200), and the value was defined as a clay-dispersing ability under water having high hardness.

### <Anti-iron deposition ability>

An anti-iron deposition ability was measured in accordance with the following procedure.

First, an aqueous solution of a measurement sample was prepared. That is, 150 g of a 0.05% aqueous solution of the sample in terms of a solid content were prepared (A liquid).

Next, an aqueous solution of an iron ion was prepared as described below. That is, 2 g of ferric (III) chloride hexahydrate were taken, and pure water was added to the ferric chloride hexahydrate thus taken so that the total weight of the mixture was 1,000 g (B liquid).

Further, an aqueous solution of sodium hydroxide was prepared as described below. That is, 3.0 g of a 48% aqueous solution of sodium hydroxide were taken, and pure water was added to the solution so that the total weight of the mixture was 1,000 g (C liquid).

100 g of the A liquid, 100 g of the B liquid, and 100 g of the C liquid were added in the stated order, and the whole was mixed. After having been stirred for 10 minutes, the mixture was left at rest for 2 hours . After having been subjected to suction filtration with 5C filter paper (55 mm) and a Buchner funnel, the mixture was dried with a vacuum desiccator for 1 hour. A value obtained by representing the L value of the filter paper measured with a spectral color difference meter (manufactured by NIPPON DENSHOKU INDUSTRIES, CO., LTD., SE-2000) in terms of a percentage with respect to a blank was defined as the anti-iron deposition ability.

### <Measurement of amount of remaining maleic acid>

The amount of remaining maleic acid was measured with a high performance liquid chromatography system (manufactured by Hitachi, Ltd., composed of an L-7100 pump, an L-7300 column oven, an L-7200 autosampler, and an L-7400 UV detector) under the following conditions.

| | |
|---|---|
| Column: | Shodex RSpak DE-413 manufactured by Showa Denko K.K. |
| Eluent: | 0.1-wt% aqueous solution of phosphoric acid |
| Flow rate: | 1 ml/min |
| Temperature: | 40°C |
| Detection wavelength: | 200 nm |

### [Example 1]

A copolymer was synthesized by using maleic acid (hereinafter abbreviated as MA) as the monomer (a), acrylic acid (hereinafter abbreviated as AA) as the monomer (b), and sodium 2-hydroxy-3-allyloxypropanesulfonate (hereinafter abbreviated as HAPS) as the monomer (c) at a molar ratio "(a) / (b) / (c)" of 45/45/10.

That is, 334.9 g of ion-exchanged water (hereinafter referred to as "pure water"), 432.3 g of a 48% aqueous solution of sodium hydroxide (hereinafter abbreviated as "48% NaOH"), 344.0 g of anhydrous MA, and 425.1 g of a 40% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 315.9 g of an 80% aqueous solution of AA, 66.6 g of 15% sodium persulfate (hereinafter abbreviated as "15% NaPS"), 117.0 g of pure water, 33.3 g of 15% NaPS, and 26.8 g of a 35% aqueous solution of hydrogen peroxide (hereinafter abbreviated as "35% H₂O₂") were dropped from different dropping nozzles continuously at a uniform rate to the flask while the reflux state was maintained. 315.9 g of the 80% aqueous solution of AA were dropped over 120 minutes from the initiation of polymerization. 66.6 g of 15% NaPS were dropped over 120 minutes from the initiation of the polymerization. 117.0 g of pure water were dropped over 80 minutes from a time point 50 minutes after the initiation of the polymerization. 33.3 g of 15% NaPS were dropped over 20 minutes from a time point 120 minutes after the initiation of the polymerization. 26.8 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (1) having a pH of 7.3 and a solid content concentration of 46% was obtained.

The copolymer had a weight average molecular weight Mw of 13,000 and an amount of remaining MA of 6,300 ppm in terms of a solid content.

Table 1 shows the results.

### [Example 2]

A copolymer was synthesized by using MA as the monomer (a), AA as the monomer (b), and HAPS as the monomer (c) at a molar ratio "(a)/(b)/(c)" of 45/45/10.

That is, 334.9 g of pure water, 432.3 g of 48% NaOH, 344.0 g of anhydrous MA, and 425.1 g of a 40% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 315.9 g of an 80% aqueous solution of AA, 109.2 g of 15% NaPS, 117.0 g of pure water, and 26.8 g of a 35% H₂O₂ were dropped from different dropping nozzles continuously at a uniform rate to the flask while the reflux state was maintained. 315.9 g of the 80% aqueous solution of AA were dropped over 120 minutes from the initiation of polymerization. 109.2 g of 15% NaPS were dropped over 140 minutes from the initiation of the polymerization. 117.0 g of pure water were dropped over 80 minutes from a time point 50 minutes after the initiation of the polymerization. 26.8 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (2) having a pH of 7.3 and a solid content concentration of 46% was obtained.

The copolymer had a weight average molecular weight Mw of 11, 000 and an amount of remaining MA of 5,000 ppm in terms of a solid content.

Table 1 shows the results.

### [Example 3]

A copolymer was synthesized by using MA as the monomer (a), AA as the monomer (b), and HAPS as the monomer (c) at a molar ratio "(a)/(b)/(c)" of 45/45/10.

That is, 334.9 g of pure water, 432.3 g of 48% NaOH, 344.0 g of anhydrous MA, and 425.1 g of a 40% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 315.9 g of an 80% aqueous solution of AA, 66.6 g of 15% NaPS, 117.0 g of pure water, 33.3 g of 15% NaPS, and 26.8 g of a 35% aqueous solution of H₂O₂ were dropped from different dropping nozzles continuously at a uniform rate to the flask while the reflux state was maintained. 315.9 g of the 80% aqueous solution of AA were dropped over 120 minutes from the initiation of polymerization. 66.6 g of 15% NaPS were dropped over 110 minutes from a time point of 10 minutes after the initiation of the polymerization. 117.0 g of pure water were dropped over 80 minutes from a time point 50 minutes after the initiation of the polymerization. 33.3 g of 15% NaPS were dropped over 20 minutes from a time point 120 minutes after the initiation of the polymerization. 26.8 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (3) having a pH of 7.3 and a solid content concentration of 46% was obtained.

The copolymer had a weight average molecular weight Mw of 13, 000 and an amount of remaining MA of 6,700 ppm in terms of a solid content.

Table 1 shows the results.

### [Comparative Example 1]

A copolymer was synthesized by using MA as the monomer (a), AA as the monomer (b), and HAPS as the monomer (c) at a molar ratio "(a)/(b)/(c)" of 45/45/10.

That is, 334.9 g of pure water, 432.3 g of 48% NaOH, 344.0 g of anhydrous MA, and 425.1 g of a 40% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 315.9 g of an 80% aqueous solution of AA, 70.2 g of 15% NaPS, 117.0 g of pure water, and 26.8 g of 35% H₂O₂ were dropped from different dropping nozzles continuously at a uniform rate to the flask while the reflux state was maintained. 315.9 g of the 80% aqueous solution of AA were dropped over 120 minutes from the initiation of polymerization. 70.2 g of 15% NaPS were dropped over 90 minutes from a time point of 50 minutes after the initiation of the polymerization. 117.0 g of pure water were dropped over 80 minutes from a time point 50 minutes after the initiation of the polymerization. 26.8 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (C1) having a pH of 7.5 and a solid content concentration of 45% was obtained.

The copolymer had a weight average molecular weight Mw of 13,000 and an amount of remaining MA of 15,000 ppm in terms of a solid content.

Table 2 shows the results.

### [Comparative Example 2]

A copolymer was synthesized by using MA as the monomer (a), AA as the monomer (b), and HAPS as the monomer (c) at a molar ratio "(a)/(b)/(c)" of 45/45/10.

That is, 43.9 g of pure water, 375.5 g of a 48% NaOH, 264.6 g of anhydrous MA, and 523.2 g of a 25% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 243.0 g of an 80% aqueous solution of AA, 48.0 g of 15% NaPS, 87.4 g of pure water, and 51.4 g of a 35% H₂O₂ were dropped from different dropping nozzles continuously at a uniform rate to the flask while the reflux state was maintained. 243.0 g of the 80% aqueous solution of AA were dropped over 120 minutes from the initiation of polymerization. 48.0 g of 15% NaPS were dropped over 80 minutes from a time point of 50 minutes after the initiation of the polymerization. 87.4 g of pure water were dropped over 80 minutes from a time point 50 minutes after the initiation of the polymerization. 51.4 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (C2) having a pH of 7.3 and a solid content concentration of 46% was obtained.

The copolymer had a weight average molecular weight Mw of 7,500 and an amount of remaining MA of 5,200 ppm in terms of a solid content.

Table 2 shows the results.

### [Comparative Example 3]

A copolymer was synthesized by using AA as the monomer (b), and HAPS as the monomer (c) at a molar ratio " (a) / (b) / (c)" of 0/90/10.

That is, 182.9 g of pure water, and 272.5 g of a 40% HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 405.0 g of an 80% aqueous solution of AA, 337.5 g of 48% NaOH, 180.0 g of 15% NaPS, 90.0 g of 15% NaPS, and 51.4 g of 35% H₂O₂ were dropped from different dropping nozzles continuously at a uniform rate to the flask while the reflux state was maintained. 405.0 g of the 80% aqueous solution of AA were dropped over 120 minutes from the initiation of polymerization. 337.5 g of 48% NaOH were dropped over 120 minutes from the initiation of polymerization. 180.0 g of 15% NaPS were dropped over 120 minutes from the initiation of the polymerization. 90.0 g of 15% NaPS were dropped over 20 minutes from a time point 120 minutes after the initiation of the polymerization. 51.4 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (C3) having a pH of 7.3 and a solid content concentration of 46% was obtained.

The copolymer had a weight average molecular weight Mw of 13, 000 and an amount of remaining MA of 0 ppm in terms of a solid content.

Table 2 shows the results.

### [Comparative Example 4]

A copolymer was synthesized by using MA as the monomer (a), AA as the monomer (b), and HAPS as the monomer (c) at a molar ratio "(a)/(b)/(c)" of 70/10/20.

That is, 100.0 g of pure water, 66.7 g of 48% NaOH, 49.0 g of anhydrous MA, and 545.0 g of a 40% aqueous solution of HAPS were initially loaded into an SUS separable flask having a volume of 2.5 L and provided with a temperature gauge, a stirring machine, and a reflux condenser, and the temperature of the resultant aqueous solution was increased under stirring so that the solution was brought into a boiling point reflux state. Next, under stirring, 315.0 g of an 80% aqueous solution of AA, 133.3 g of 15% NaPS, 60.0 g of pure water, 66.7 g of 15% NaPS, and 17.1 g of a 35% H₂O₂ were dropped from different dropping nozzles continuously at a uniform rate to the flask while the reflux state was maintained. 315.0 g of the 80% aqueous solution of AA were dropped over 120 minutes from the initiation of polymerization. 133.3 g of 15% NaPS were dropped over 120 minutes from the initiation of the polymerization. 60.0 g of pure water were dropped over 80 minutes from a time point 50 minutes after the initiation of the polymerization. 66.7 g of 15% NaPS were dropped over 20 minutes from a time point of 120 minutes after the initiation of the polymerization. 17.1 g of 35% H₂O₂ were dropped over 50 minutes from the initiation of the polymerization. Further, after the termination of the dropping of all components, the boiling point reflux state was maintained over 30 minutes, whereby the polymerization was completed.

After the termination of the polymerization, the pH and concentration of the resultant were adjusted with 48% NaOH, whereby a copolymer (C4) having a pH of 7.3 and a solid content concentration of 46% was obtained.

The copolymer had a weight average molecular weight Mw of 36, 000 and an amount of remaining MA of 0 ppm in terms of a solid content.

Table 2 shows the results.

**Table 1**

| | Example 1 | Example 2 | Example 3 |
|---|---|---|---|
| Structure | AA/MA/HAPS | AA/MA/HAPS | AA/MA/HAPS |
| Molar ratio | 45/45/10 | 45/45/10 | 45/45/10 |
| Molecular weight | 13,000 | 11,000 | 13,000 |
| Time period for which AA is dropped (min) | 0 to 120 | 0 to 120 | 0 to 120 |
| Time period for which MA is dropped | Initial loading | Initial loading | Initial loading |
| Time period for which HAPS is dropped | Initial loading | Initial loading | Initial loading |
| Time period for which persulfate is dropped (min) | 0 to 140 | 0 to 140 | 10 to 140 |
| Time period for which hydrogen peroxide is dropped (min) | 0 to 50 | 0 to 50 | 0 to 50 |
| Amount in which persulfate is dropped after dropping of AA (wt%) | 33 | 22 | 33 |
| Remaining maleic acid (ppm) | 6,300 | 5,000 | 6,700 |
| Clay-dispersing ability | 1.15 | 1.14 | 1.14 |
| Anti-iron deposition ability | 93.0 | 93.4 | 92.7 |

**Table 2**

| | Comparative Example 1 | Comparative Example 2 | Comparative Example 3 | Comparative Example 4 |
|---|---|---|---|---|
| Structure | AA/MA/HAPS | AA/MA/HAPS | AA /HAPS | AA/MA/HAPS |
| Molar ratio | 45/45/10 | 45/45/10 | 90/10 | 70/10/20 |
| Weight average molecular weight | 13,000 | 7,500 | 13,000 | 36,000 |
| Time period for which AA is dropped (min) | 0 to 120 | 0 to 120 | 0 to 120 | 0 to 120 |
| Time period for which MA is dropped | Initial loading | Initial loading | - | Initial loading |
| Time period for which HAPS is dropped | Initial loading | Initial loading | Initial loading | Initial loading |
| Time period for which persulfate is dropped (min) | 50 to 140 | 50 to 130 | 0 to 140 | 0 to 140 |
| Time period for which hydrogen peroxide is dropped (min) | 0 to 50 | 0 to 50 | 0 to 50 | 0 to 50 |
| Amount in which persulfate is dropped after dropping of AA (wt%) | 22 | 13 | 33 | 33 |
| Remaining maleic acid (ppm) | 15,000 | 5,200 | 0 | 0 |
| Clay -dispersing ability | 1.10 | 0.93 | 1.19 | 1.04 |
| Anti-iron deposition ability | 91.9 | 93.3 | 90.5 | 91.3 |

Tables 1 and 2 show the following.
(1) Examples 1 to 3 are each an example in which the copolymer composition of the present invention produced by the production method of the present invention is used. In each of Examples 1 to 3, a high level of compatibility between clay dispersibility under water having high hardness and an anti-iron deposition ability can be achieved, and the amount of remaining maleic acid is extremely small. It should be noted that the amount in which a persulfate is dropped after the dropping of AA in each of Examples 1 and 3 (33 wt%) is larger than the amount in which a persulfate is dropped after the dropping of AA in Example 2 (22 wt%). As a result, the amount of remaining maleic acid in each of Examples 1 and 3 is somewhat larger than that in Example 2, and an anti-iron deposition ability in each of Examples 1 and 3 is somewhat lower than that in Example 2.
(2) Comparative Example 2 is an example in which a copolymer composition corresponding to a copolymer produced in conformance with the production method described in Example 1-2 of JP 2000-355615 A is used. According to Comparative Example 2, the weight average molecular weight of the copolymer is 7,500, which deviates from the range of the copolymer composition of the present invention. In addition, the dropping of a persulfate is not initiated within a time period corresponding to one third of the time period for which AA is dropped from the time point of the initiation of the dropping of AA. Comparative Example 2 involves the following problem: clay dispersibility under water having high hardness is low.
(3) Comparative Example 1 is the same as Comparative Example 2 except that the amount in which a persulfate is dropped after the dropping of AA is increased to 22 wt% and the weight average molecular weight of the copolymer is 12, 000. Although clay dispersibility under water having high hardness is good in Comparative Example 2, Comparative Example 1 involves the following problems: the amount of remaining maleic acid is large, and an anti-iron deposition ability is low.
(4) Comparative Example 3 is the same as Example 1 except that MA is not used and a copolymer having a structure composed of AA and HAPS at a molar ratio "AA/HAPS" of 90/10 is used. In Comparative Example 3, clay dispersibility under water having high hardness is good, and maleic acid does not remain because MA is not used. However, Comparative Example 3 involves the following problem: an anti-iron deposition ability is low.
(5) Comparative Example 4 is an example in which a copolymer composition corresponding to the copolymer described in Example 8 of JP 02-129020 A is used. In Comparative Example 4, clay dispersibility under water having high hardness is good, and the amount of remaining maleic acid is small because the content of MA is small (10 mol%). However, Comparative Example 4 involves the following problem: an anti-iron deposition ability is low.

The foregoing shows that the copolymer composition of the present invention, and a copolymer composition produced by the production method of the present invention are each a copolymer composition which can achieve a high level of compatibility between clay dispersibility under water having high hardness and an anti-iron deposition ability and is suitable for an additive for a detergent. Accordingly, the copolymer composition of the present invention, and the copolymer composition produced by the production method of the present invention each have performance that could not be achieved by a conventional copolymer containing a structural unit originating from the monoethylenic unsaturated monocarboxylic acid (or monocarboxylate) monomer (b), a structural unit originating from the monoethylenic unsaturated dicarboxylic acid (or dicarboxylate) monomer (a), and a structural unit originating from the sulfonic acid (or sulfonate) group-containing monomer (c) free of an ester bond and an amide bond.

### INDUSTRIAL APPLICABILITY

The copolymer composition of the present invention can be suitably used in a detergent composition.

## Claims

1. A copolymer composition, comprising:
a copolymer (P) which has a weight average molecular weight, measured by gel permeation chromatography in accordance with the method defined in the description, of 10,000 to 50,000 and contains a structural unit originating from a monoethylenic unsaturated dicarboxylic acid (or dicarboxylate) monomer (a), a structural unit originating from a monoethylenic unsaturated monocarboxylic acid (or monocarboxylate) monomer (b), a structural unit originating from a sulfonic acid (or sulfonate) group-containing monomer (c) free of an ester bond and an amide bond, and a structural unit originating from another monomer (d), wherein a content ratio (a)/(b)/(c)/(d) is (30 to 60 mol%)/(30 to 60 mol%)/(5 to 16 mol%)/(0 to 5 mol%) in a molar ratio and 100 mol% in the total; and
a remaining monoethylenic unsaturated dicarboxylic acid (or dicarboxylate) monomer a content of which in terms of an acid is less than 12,000 ppm.

2. The copolymer composition according to claim 1, wherein the sulfonic acid (or sulfonate) group-containing monomer (c) free of an ester bond and an amide bond comprises a 3-allyloxy-2-hydroxypropanesulfonic acid (or 3-allyloxy-2-hydroxypropanesulfonate) monomer.

3. A method of producing the copolymer composition according to claim 1 or 2 by using a monoethylenic unsaturated dicarboxylic acid (or dicarboxylate) monomer (a), a monoethylenic unsaturated monocarboxylic acid (or monocarboxylate) monomer (b), a sulfonic acid (or sulfonate) group-containing monomer (c) free of an ester bond and an amide bond as monomers for polymerization and another monomer (d), comprising:
(1) in an aqueous solvent containing 80 wt% or more of water,
(2) loading initially 80 wt% or more of the monoethylenic unsaturated dicarboxylic acid (or dicarboxylate) monomer (a) with respect to a total usage of the monomer (a), and dropping the remainder of the monomer (a);
(3) dropping 90 wt% or more of the monoethylenic unsaturated monocarboxylic acid (or monocarboxylate) monomer (b) with respect to a total usage of the monomer (b), and loading initially the remainder of the monomer (b);
(4) dropping 80 wt% or more of each of hydrogen peroxide and a persulfate as polymerization initiators with respect to a usage of each of hydrogen peroxide and the persulfate, and loading initially the remainder of each of hydrogen peroxide and the persulfate, and initiating the dropping of each of hydrogen peroxide and the persulfate within a time period corresponding to one third of a total time period for which a monomer for polymerization dropping of which is initiated earliest is dropped from a time point of the initiation of the dropping of the monomer for polymerization;
(5) adjusting, after termination of the initial loading, a neutralization degree to 50 to 95 mol% with respect to a total acid amount originating from the initially loaded monomers for polymerization, initiating polymerization of the monomers after the adjustment, and adjusting a solid content concentration of reactants during a polymerization reaction to 40 to 70 wt%; and
(6) adjusting, after termination of dropping of a total amount of the monomers for polymerization, a pH of the reactants to 4 to 10, adjusting the solid content concentration to 40 to 60 wt%, and setting a polymerization temperature to 80°C or higher.

4. The method of producing a copolymer composition according to claim 3, wherein 25 wt% or more of a total usage of the persulfate is dropped after the termination of the dropping of the total amount of the monomers for polymerization.

## Patentansprüche

1. Copolymerzusammensetzung, die Folgendes umfasst:
ein Copolymer (P), das ein Gewichtsmittel-Molekulargewicht, gemessen durch Gelpermeationschromatographie in Übereinstimmung mit dem Verfahren, das in der Beschreibung definiert ist, von 10.000 bis 50.000 aufweist und eine Struktureinheit enthält, die von einem monoethylenisch ungesättigten Dicarbonsäure (oder Dicarboxylat)-Monomer (a) stammt, eine Struktureinheit, die von einem monoethylenisch ungesättigten Monocarbonsäure (oder Monocarboxylat)-Monomer (b) stammt, eine Struktureinheit, die von einem Sulfonsäure (oder Sulfonat)-Gruppe enthaltenden Monomer (c) ohne eine Esterbindung und eine Amidbindung stammt, und eine Struktureinheit, die von einem anderen Monomer (d) stammt, wobei ein Gehaltsverhältnis (a)/(b)/(c)/(d) (30 bis 60 mol%)/(30 bis 60 mol%)/(5 bis 16 mol%)/(0 bis 5 mol%) in einem molaren Verhältnis und 100 mol% insgesamt beträgt; und
ein verbleibendes monoethylenisch ungesättigtes Dicarbonsäure (oder Dicarboxylat)-Monomer, dessen Gehalt bezogen auf eine Säure weniger als 12.000 ppm beträgt.

2. Copolymerzusammensetzung gemäß Anspruch 1, wobei das Sulfonsäure (oder Sulfonat)-Gruppe enthaltende Monomer (c) ohne eine Esterbindung und eine Amidbindung ein 3-Allyloxy-2-hydroxypropansulfonsäure (oder 3-Allyloxy-2-hydroxypropansulfonat)-Monomer umfasst.

3. Verfahren zum Herstellen der Copolymerzusammensetzung gemäß Anspruch 1 oder 2 durch Verwendung eines monoethylenisch ungesättigten Dicarbonsäure (oder Dicarboxylat)-Monomers (a), eines monoethylenisch ungesättigten Monocarbonsäure (oder Monocarboxylat)-Monomers (b), eines Sulfonsäure (oder Sulfonat)-Gruppe enthaltenden Monomers (c) ohne eine Esterbindung und eine Amidbindung als Monomere für Polymerisation und eines anderen Monomers (d), umfassend:
(1) in einem wässrigen Lösungsmittel, das 80 Gew.-% oder mehr Wasser enthält,
(2) Vorlegen von anfangs 80 Gew.-% oder mehr des monoethylenisch ungesättigten Dicarbonsäure (oder Dicarboxylat)-Monomers (a) hinsichtlich einer Gesamtverwendung des Monomers (a) und Zutropfen des Rests des Monomers (a);
(3) Zutropfen von 90 Gew.-% oder mehr des monoethylenisch ungesättigten Monocarbonsäure (oder Monocarboxylat) Monomers (b) hinsichtlich einer Gesamtverwendung des Monomers (b) und anfängliches Vorlegen des Rests des Monomers (b);
(4) Zutropfen von 80 Gew.-% oder mehr von jedem von Wasserstoffperoxid und einem Persulfat als Polymerisationsinitiatoren hinsichtlich einer Verwendung von jedem von Wasserstoffperoxid und dem Persulfat und anfängliches Vorlegen des Rests von jedem von Wasserstoffperoxid und dem Persulfat und Beginnen des Zutropfens von jedem von Wasserstoffperoxid und dem Persulfat innerhalb eines Zeitraums, der einem Drittel eines Gesamtzeitraums entspricht, für den ein Monomer für Polymerisation, dessen Zutropfen am frühesten begonnen wird, zugetropft wird, ab einem Zeitpunkt des Beginns des Zutropfens des Monomers für Polymerisation;
(5) Einstellen, nach Beendigung des anfänglichen Vorlegens, eines Neutralisationgrades auf 50 bis 95 Mol% hinsichtlich einer Gesamtsäuremenge, die von den anfänglich vorgelegten Monomeren für Polymerisation stammt, Initiieren der Polymerisation der Monomere nach dem Einstellen und Einstellen einer Feststoffgehaltkonzentration der Reaktanten während einer Polymerisationsreaktion auf 40 bis 70 Gew.-%; und
(6) Einstellen, nach Beendigung des Zutropfens einer Gesamtmenge der Monomere für Polymerisation, eines pH der Reaktanten auf 4 bis 10, Einstellen der Feststoffgehaltkonzentration auf 40 bis 60 Gew.-% und Festlegen einer Polymerisationstemperatur auf 80 °C oder höher.

4. Verfahren zum Herstellen einer Copolymerzusammensetzung gemäß Anspruch 3, wobei 25 Gew.-% oder mehr einer Gesamtverwendung des Persulfats nach der Beendigung des Zutropfens der Gesamtmenge der Monomere für Polymerisation zugetropft wird.

## Revendications

1. Composition de copolymère comprenant :
un copolymère (P) ayant un poids moléculaire moyen en poids, mesuré par chromatographie par perméation de gel selon le procédé défini dans la description, de 10 000 à 50 000 et contenant un motif structural provenant d'un monomère d'acide dicarboxylique (ou dicarboxylate) insaturé méthylénique (a), un motif structural provenant d'un monomère d'acide monocarboxylique (ou monocarboxylate) insaturé monoéthylénique (b), un motif structural provenant d'un monomère contenant un groupe acide sulfonique (ou sulfonate) (c) exempt de liaison ester et de liaison amide, et un motif structural provenant d'un autre monomère (d), dans lequel un rapport constant (a)/(b)/(c)/(d) est (30 à 60 % en moles)/(30 à 60 % en moles) / (5 à 16 % en moles) / (0 à 5 % en moles) dans un rapport molaire et 100 % en moles dans le total ; et
un monomère d'acide dicarboxylique (ou dicarboxylate) insaturé monoéthylénique résiduel dont la teneur en termes d'acide est inférieure à 12 000 ppm.

2. Composition de copolymère selon la revendication 1, dans laquelle le monomère contenant un groupe acide sulfonique (ou sulfonate) (c) exempt de liaison ester et de liaison amide comprend un monomère d'acide 3-allyloxy-2-hydroxypropanesulfonique (ou 3-allyloxy-2-hydroxypropanesulfonate).

3. Procédé de production de la composition de copolymère selon la revendication 1 ou 2 par utilisation d'un monomère d'acide dicarboxylique (ou dicarboxylate) insaturé monoéthylénique (a), un monomère d'acide monocarboxylique (ou monocarboxylate) insaturé monoéthylénique (b), un acide sulfonique monomère contenant un groupe (ou sulfonate) (c) exempt de liaison ester et de liaison amide en tant que monomères pour la polymérisation et un autre monomère (d), comprenant :
(1) dans un solvant aqueux contenant 80 % en poids ou plus d'eau,
(2) le chargement initial de 80 % en poids ou plus du monomère (ou dicarboxylate) d'acide dicarboxylique monoéthylénique insaturé (a) par rapport à l'utilisation totale du monomère (a), et l'ajout goutte à goutte du reste du monomère (a) ;
(3) l'ajout goutte à goutte de 90 % en poids ou plus du monomère d'acide monocarboxylique (ou monocarboxylate) insaturé monoéthylénique (b) par rapport à l'utilisation totale du monomère (b) et le chargement initial du reste du monomère (b) ;
(4) l'ajout goutte à goutte de 80 % en poids ou plus de peroxyde d'hydrogène et d'un persulfate en tant qu'initiateurs de polymérisation par rapport à l'utilisation de chacun du peroxyde d'hydrogène et du persulfate, et le chargement initial du reste du peroxyde d'hydrogène et du persulfate, et le démarrage de l'ajout goutte à goutte de chacun du peroxyde d'hydrogène et du persulfate dans un laps de temps correspondant au tiers de la durée totale pendant laquelle un monomère pour polymérisation dont l'ajout goutte à goutte est démarré le plus tôt est ajouté goutte à goutte à partir du temps du démarrage de l'ajout goutte à goutte du monomère pour polymérisation ;
(5) l'ajustement, après la fin du chargement initial, d'un degré de neutralisation à 50 à 95 % en moles par rapport à une quantité totale d'acide provenant des monomères initialement chargés pour la polymérisation, le démarrage de la polymérisation des monomères après l'ajustement, et l'ajustement d'une concentration en matières solides des réactifs pendant une réaction de polymérisation comprise de 40 à 70 % en poids ; et
(6) l'ajustement, après la fin de l'ajout goutte à goutte d'une quantité totale de monomères pour la polymérisation, d'un pH des réactifs de 4 à 10, l'ajustement de la concentration en matières solides à 40 à 60 % en poids et la régulation d'une température de polymérisation à 80 °C ou plus.

4. Procédé de production d'une composition de copolymère selon la revendication 3, dans lequel 25 % en poids ou plus d'une utilisation totale du persulfate sont ajoutés goutte à goutte après la fin de l'ajout goutte à goutte de la quantité totale des monomères pour polymérisation.
